# EUROPEAN PATENT APPLICATION

(11) **EP 1 571 028 A2**
(43) Date of publication of application: **07.09.2005**
(21) Application number: 05425095.6
(22) Date of filing: 23.02.2005
(51) Int. Cl.: B60K 15/04

(54) **Refueling opening of a tank**

(30) Priority: 27.02.2004 IT FR20040005 U
(71) Applicant: Gigliozzi, Danilo, 03036 Isola del Liri (Frosinone) (IT)
(72) Inventor: Gigliozzi, Danilo, 03036 Isola del Liri (Frosinone) (IT)

(57) **Abstract**

The innovation regards a safety union which prevents accidental insertions of petrol into the tanks of vehicles feeded with diesel oil.

Such union is characterized by the fact that its construction previews an entrance hole, and an exit hole delimited from one mobile safety door; the entrance hole, has a smaller diameter than the other of the petrol gun device for the forced recovery of the vapours. The distance between the entrance hole and the exit hole of the safety union is greater than the distance between the mentioned device and the exit mouth of the petrol gun; with the help of the safety door attacted to the edge of the exit hole, it is possible to prevent petrol penetrating into the tank of the diesel oil feeded cars. In fact, only with a diesel oil, it is possible to push a mobile cursor, that, at turn, opens the safety door, allowing the liquid to flow inside the diesel oil tank of the car.

## Description

The present innovation regards a safety union for the fuel refuelling in means feeded with diesel oil.

More in detail this innovation regards ypethe union, as the t above mentioned which that prevents accidental insertions of petrol in tanks of vehicles feeded with diesel oil, avoiding therefore damages to the motor of motors vehicle, trucks, tractors, electricity-generating and similar groups.

Hereafter the description will be focused on the safety of the motor vehicles; however it's obvious that the innovation doesn't have to be considered limited to this specific use, since the union could be used for other types of vehicles and machineries.

it's common knowledge that at present exists a device installed on the vehicles, which allows to avoid that in service stations, where your vehicle can be resupplied, you can insert accidentally the diesel oil in the tank of a petrol feeded car. An error of this type, in fact, would compromise a correct functioning of the motor.

A system that avoids the inverse procedure hasn't been adopted up to today. In particular it is possible, by mistake, to insert the petrol in the tank of the vehicle feeded with diesel oil.

The damages to the mechanical organs of the car and the uneasiness to the passengers because of this error are remarkable and in many cases extremely onerous.

At present in the service areas the distributors of petrol and diesel oil are often distinguished-thanks to their colour and disposition. This facilitates the recognition of the correct pump of distribution. However, it doesn't guarantee a solution to the problem. For example especially in the self-service areas, when you do not drive your car (for example the hired car), or when you have bought a new car feeded with fuel different from the one you have used before, it's obvious that the solutions taken up to now in this situation are not sufficient enough.

Some of the substantial differences between the guns of refuelling for the petrol and those for the diesel oil, consist of a various length and a various diameter of the tube that is inserted inside the fuel refuelling union.

Moreover, on the tube of the- gun for the petrol refuelling, there is a device previewed for the forced recovery of the vapors that is already obligatorily installed in all the systems of fuel distribution.

In the light of what has been stated above obviously at first there is the necessity to create some systems or devices that make the gun of the petrol distributor incompatible with the entrance of the car tank or some means feeded with diesel oil, such as the one proposed in this innovation; consequently it must be easily installed in the cars feeded with diesel oil.

In this case arrives the solution proposed in the present innovation.

Another object of this innovation is to make it possibly stick in the cars too that don't preview it when built.

The specific object of the present innovation is composed of a safety union for the fuel refuelling to install in means feeded with diesel oil situated at the entrance of the tube that brings fuel into the tank of the vehicle and characterized by the-fact that its construction previews an entrance hole and an exit hole which is delimited from one mobile safety door; the entrance hole, has an inferior diameter than the one of the device of the petrol gun already obligatorily installed in all the systems of fuel distribution and previewed for the forced recovery of vapors of the same petrol. Such device is arranged coaxially and externally on the exit tube of a petrol pump gun. The distance between the entrance hole and the exit hole of the safety union, is greater than the distance between the union device previewed for the forced recovery of the vapours and the exit mouth of the above mentioned tube of the petrol gun; with the help of the safety door attached to the edge of the exit hole which is situated on the inferior part of the safety union, so as to close in a rest position the right of the exit hole, and for the action of the means of the callback, combined with the door it prevents the petrol to penetrate into the tank of the diesel oit feeded cars. In fact, keeping the exit hole of the union through safety door normally closed, it is possible to push the safety door only with the diesel oil gun refuelling used at the service stations allowing the liquid to flow inside the diesel oil tank of the car; instead it's obvious that the above mentioned door can't be opened by the action of the tip of the petrol gun tube, which eventually would be used in an improper way during the operations of refuelling for the above mentioned reasons.

The guarantee that the safety union door can be opened only by pushing the diesel oil gun, whose diameter is smaller than the device for the forced recovery of petrol vapours installed on the diesel oil gun makes the new system- of refuelling innovative and safe. According to the innovation, above mentioned means of callback can be for the safety constituted by a spring.

Preferably according to the innovation, this safety union can have a substantially cylindrical shape. Moreover, according to the innovation, a hem can be on the entrance which can comprise a lodging and/or a lock for a stopper. The present innovation will be described now as an illustrative and not restrective object, according to executive variations wanted, with particular reference to the pictures of the enclosed designs, in which:

The picture 1 (TABLE 1) shows a sight to the safety union according to the innovation.

The table 2 shows the particulars of the diesel oil gun (picture A) and the petrol gun (picture B) putting in evidence the different length of the tube, through which the fuel passes, a different diameter and the device 31 (picture B) for the forced recoveryof the petrol vapours.

The particular of the picture 1 (TABLE 3) shows a sight in section belonging to the safety union according to the innovation, on which is inserted a gun of a petrol distributor up to the device previewed for the forced recovery of petrol vapours and it points out the impossibility of the exit tube of the same diesel oil pump to reach, push and open the mobile door placed at the exit hole of the safety union.

With reference to the pictures 1 end 2 (TAV 3) it is possible to understand the functioning of the safety union (table 1) showed with the generic reference 1.

The safety union 1 (TABLE 1) whose shape, according to the innovation, is preferably cilindrical, comes installed on the entrance of a tube that brings the fuel into the tank of the vehicle feeded with diesel oil and previews a diameter of the entrance hole 11 (TABLE 1), which allows the gun A (TABLE 2) of a diesel oil distributor to enter, to reach and to open the safety door 4 (TABLE 1), allowing the fuel to flow towards the tank. In contrast the above-mentioned safety union (TABLE 1) prevents the guns B (TABLE 2) of the petrol distributor from being able to enter in a sufficient measure and consequently open the above-mentioned safety door 4 (TABLE 1).

As it is possible to observe, the guns B (TABLE 2) of the petrol distributors are equipped of a device for the forced recovery of vapours 31 (fig. B). The above-mentioned device 31 (fig. B) is arranged coaxially to the conduit 32 (fig. B) through which the petrol slides. Such device 31 (fig. B), obligatorily installed for the forced recovery of the petrol vapours, previews a wider diameter of the section of the conduit 32 (fig. B). Moreover, the distance between the exit mouth of the petrol gun 33 (fig. B) and the above-mentioned device 31 (fig. B) previewed for the forced recovery of the vapours is standard. The union 1 (TABLE 1) according to the innovation, previews both a distance between the entrance hole 11 (TAV. 1) and the exit hole 12 (TAV. 1) greater than the distance between the exit mouth 33 (fig. B) of the petrol gun and the device previewed for the forced recovery of the vapours 31 (fig. B.) and both a diameter of the entrance hole 11 (TAV.1) smaller than the one of the above-mentioned device for the forced recovery of vapours 31 (fig. B). Therefore the exit mouth 33 (fig. B) of the petrol gun is not able to catch up the door 4 (TABLE 1) beaucause the device for the forced recovery of petrol vapours 31 (fig. B), having a diameter bigger than the other, doesn't fit with the entrance hole 11 (TAV. 1), as the picture 1 shows (TAV. 3).

Not being able to open the above-mentioned safety door 4 (TABLE 1) following the procedure, the condition which allows the filling of the diesel oil tank with the petrol doesn't exist because the distribution of fuel is arrested in the same way as if the tank has already been filled up. This occurs thanks to the function of the device which is already present on the pumps in use in the fuel distribution systems.

The gun A (TAV. 2), which is normally in use in the diesel oil distributors, doesn't have any device previewed for the forced recovery of the vapours. Therefore the conduit 22 (fig. A) has a uniform and smaller section of the device previewed for the forced recovery of vapors 31 (fig. B), for all its length. This allows the gun B (TAV. 2) to enter in union 1 (TABLE 1), and to reach, with the end of the conduit 22 (fig A) the exit hole 12 (TAV. 1) and, therefore, to reach the door 4 (TABLE 1) and to open it allowing the normal flow of fuel into the tank.

The TABLE 1 shows that, to execute refuelling, when the conduit 22 (figure A) is extracted from union 1 (TABLE 1), and the door 4 (TABLE 1) clooss again the exit hole 12 (TABLE 1) of the union 1 (TABLE 1). This happens by means of recall 41 (TABLE 1) as for example a spring, restoring the function anti-insertion of petrol from a gun B (TABLE 2) in a tank of a vehicle feeded with diesel oil.

On the base of the previous descriptions, it can be observed that the main characteristic of this innovation is the certainty to render the union incompatible for the refuelling of diesel oil to the gun of a petrol distributor by means of an opportune dimensioning of the length of the union 1 (TABLE 1), and the diameter of the entrance.

Another advantage of the present innovation is the possibility to install the above-mentioned union also on cars, on which the union is not previewed by the home maker, because of specific constructions, adaptations and/or small changes which can be carried out on the tube, that brings the fuel to the tank or on the union installed by the houses manufacturers of the vehicles. The present innovation moreover is positively characterized by the fact that, taking into account the possible low costs for its production, it can be easy adopted by the automotive houses during the fabrication of cars or of the means that preview a diesel oil motor.

The present innovation has been described in an illustrative capacity, but not restrective, according to its favourite forms of realization, but it is important to understand that variations and/or changes could be brought by the experts of the branch without exiting, in this way, from the specific environment of protection, as is defined in the attached claims.

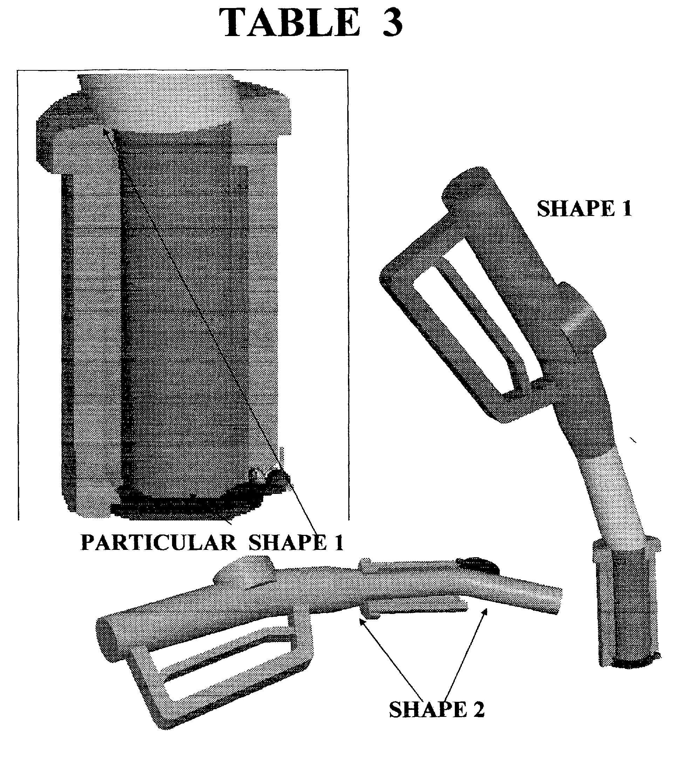

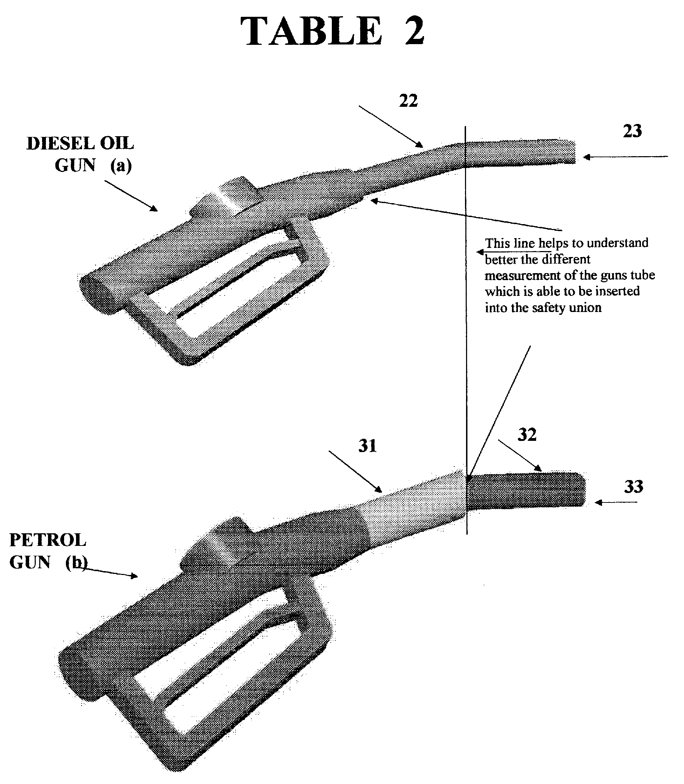

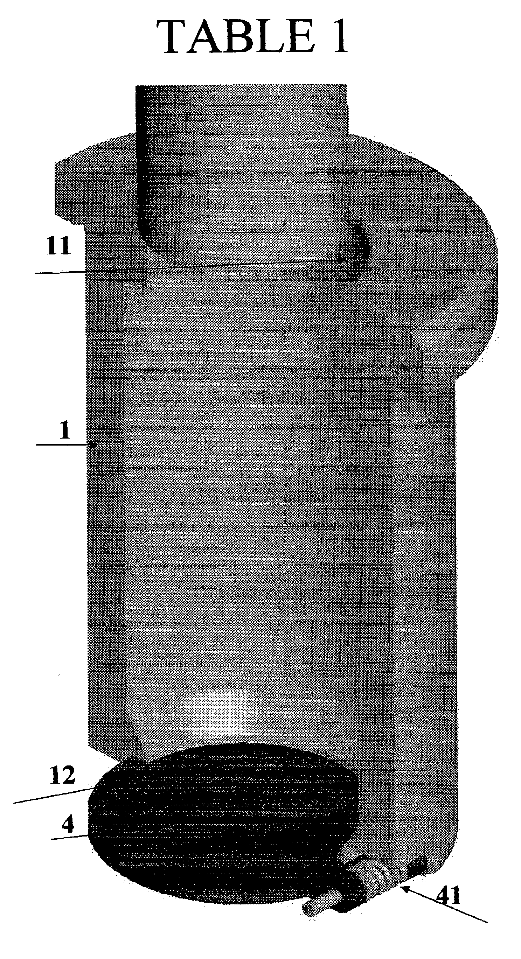

## Claims

1. Safety union picture 1 (TABLE 1) for the fuel refuelling in vehicles feeded with diesel oil, installed on the entrance of a tube that brings the fuel to the tank and **characterized by** the fact of previewing an entrance hole 11 (TABLE 1) and an exit hole 12 (TABLE 1), the above-mentioned entrance hole has smaller diameter than the one of the device previewed for the forced recovery of petrol vapours 31 (fig. B) which is arranged coaxially and externally on the conduit 32 (fig. B) of the gun B (TAV. 2) for the petrol pump; the distance between the above-mentioned entrance hole 11 (TABLE 1) and above-mentioned exit hole 12 (TABLE 1) of the union 1 (TABLE 1) is greater than the distance between the above-mentioned device previewed for the forced recovery of the vapours 31 (fig. B) and the exit mouth- 33 (fig. B) of the mentioned conduit 32 (fig. B); the union 1 (TABLE 1) is **characterized by** the fact of previewing at least one safety door 4 (TABLE 1) attached on the- edge of the above-mentioned exit hole 12 (TABLE 1) so as to close, in a position of rest the light of the same exit hole; there are present means of callback 41 (TABLE 1) paired to the above-mentioned door 4 (TABLE 1) that normally maintain the above-mentioned exit hole closed 12 (TABLE 1) and the- mentioned door 4 (TABLE 1), is opened only thanks to the action of the extremity of the above mentioned conduit 22 (fig. A) of a diesel gun A during the refuelling operations it's important to evidence, for the above mentioned reasons, that the mentioned safety union 1 (TABLE 1) allows only the proper fuel into the tanks of vehicles, which are feeded with diesel oil.

2. The safety union according to the claim 1, **characterized by** the fact that the above-mentioned means of callback can be constituted of a spring.

3. The safety union according to one of the previous claims, **characterized by** the fact of being able to have a substantially cylindrical shape.

4. The safety union according to one of the previous claims, **characterized by** the fact of being able to preview a hem to the entrance hole.

5. The safety union according to the claim 4, **characterized by** the fact that the above-mentioned hem can comprise a lodging and/or one lock for a stopper.

6. The safety union according to all of the previous claims substantially as illustrated and described.
